# EUROPÄISCHE PATENTANMELDUNG

(11) **EP 2 295 174 A2**
(43) Veröffentlichungstag der Anmeldung: **16.03.2011**
(21) Anmeldenummer: 10176473.6
(22) Anmeldetag: 13.09.2010
(51) Int. Cl.: B23B 5/16

(54) **Bohrmaschinenwerkzeug**

(30) Priorität: 15.09.2009 DE 102009041337
(71) Anmelder: Wezag GmbH Werkzeugfabrik, 35260 Stadtallendorf (DE)
(72) Erfinder: Battenfeld, Kurt, 35085, Ebsdorfergrund/Wittelsberg (DE); Glockseisen, Thomas, 40217, Düsseldorf (DE)
(74) Vertreter: Rehberg Hüppe + Partner

(57) **Zusammenfassung**

Die Erfindung betrifft ein Bohrmaschinen-Werkzeug (10), mit welchem eine Beschichtung, insbesondere eine Lackierung, eines Grundkörpers eines Rohres teilweise beseitigt werden soll, um eine Funktionsfläche, beispielsweise für ein Dichtelement, zu schaffen.

Erfindungsgemäß findet in dem Bohrmaschinen-Werkzeug (10), welches mit dem Bohrfutter einer Bohrmaschine oder eines Akku-Schraubers koppelbar ist, ein Schneidmesser (17) Einsatz, mit welchem die Beschichtung "abgeschält" wird.

## Beschreibung

### TECHNISCHES GEBIET DER ERFINDUNG

Die Erfindung betrifft ein Bohrmaschinen-Werkzeug, welches einsetzbar ist zum teilweisen Beseitigen einer Beschichtung oder einer Schicht eines Grundkörpers eines Rohres. Weiterhin betrifft die Erfindung eine Verwendung eines Bohrmaschinen-Werkzeugs.

### STAND DER TECHNIK

Es ist bekannt, Rohre mit einer Beschichtung zu versehen. Eine derartige Beschichtung kann für die Ausbildung des Rohres aus Eisen einem Transport- und/oder Korrosionsschutz dienen. Beispielsweise werden dickwandige Stahlrohre verkauft, die mit einer Lackbeschichtung versehen sind. Soll ein axialer Teilbereich der Mantelfläche des Rohres als Funktionsfläche dienen, kann die nicht weiter bearbeitete Beschichtung, bspw. infolge der Materialeigenschaften, vorhandener Poren, Ausnehmungen, Vorsprünge, Inhomogenitäten u. ä. zur Ausbildung einer Funktionsfläche ungeeignet ist. Für die Beschichtung von Rohren mit einem Lack können der Lack, dessen Eigenschaften und der Außendurchmesser und die Außenrundheit der Beschichtung mit dem Lack nicht normativ erfasst werden. Für den Fall, dass die Beschichtung des Rohres durch Eintauchen, beispielsweise in einen Lack, hergestellt wird, können die Außendurchmesser der Mantelfläche der Beschichtung stark variieren, und die Rundheit der Außenfläche kann ungenügend sein zur Ausbildung der Funktionsfläche. Hinzu kommen kann, dass die Beschichtung Oberflächenfehler besitzt, die beispielsweise während der Herstellung oder durch die Handhabung entstehen mit der Ausbildung von Rissen oder Kratzern, durch eine Tropfenbildung im Anschluss an den Tauchvorgang bedingt sind o. ä. Dient die Funktionsfläche beispielsweise der Abstützung eines Dichtelements, kann eine ungenügende Funktionsfläche, insbesondere das Auftreten der Oberflächenfehler, zu einer ungenügenden Dichtigkeit zwischen dem Dichtelement und der Funktionsfläche und/oder einem erhöhten Verschleiß führen.

Werkzeuge zur materialabtragenden Bearbeitung sind aus EP 0 720 890 B2 und EP 1 797 982 A1 bekannt.

### AUFGABE DER ERFINDUNG

Der Erfindung liegt die Aufgabe zugrunde, ein Werkzeug vorzuschlagen, mittels dessen auf einfache Weise, bei verhältnismäßig niedrigen Kosten für das Werkzeug und/oder geringem apparativen Aufwand eine verbesserte Funktionsfläche an einem Rohr bereitgestellt werden kann. Weiterhin liegt der Erfindung die Aufgabe zugrunde, eine neue Verwendung eines Werkzeugs vorzuschlagen.

### LÖSUNG

Die Aufgabe der Erfindung wird erfindungsgemäß mit den Merkmalen des unabhängigen Patentanspruchs 1 gelöst. Weitere Ausgestaltungen eines erfindungsgemäßen Bohrmaschinen-Werkzeugs ergeben sich entsprechend den abhängigen Patentansprüchen 2 bis 15. Eine weitere Lösung der der Erfindung zugrundeliegenden Aufgabe ist gegeben durch eine Verwendung eines Werkzeugs gemäß Patentanspruch 16.

### BESCHREIBUNG DER ERFINDUNG

Die Erfindung schlägt vor, ein Werkzeug als Bohrmaschinen-Werkzeug auszubilden. Hierunter wird ein Werkzeug verstanden, welches von der Antriebsleistung einer beliebig ausgebildeten Bohrmaschine antreibbar ist, nämlich in Rotation versetzt werden kann. Im einfachsten Fall handelt es sich bei der Bohrmaschine, mittels welcher das Werkzeug koppelbar ist, um einen Akku-Schrauber, wobei auch beliebige Bohrmaschinen anderer Typen als Antrieb nutzbar sind. Somit kann die für das Werkzeug genutzte Bohrmaschine multifunktional eingesetzt werden, da diese einerseits für die üblichen Zwecke einer Bohrmaschine eingesetzt werden kann und andererseits zum Antrieb des erfindungsgemäßen Werkzeugs.

Erfindungsgemäß ist in dem Bohrmaschinen-Werkzeug ein Schneidmesser eingesetzt. Dieser Ausgestaltung der Erfindung liegt die Erkenntnis zugrunde, dass für ein Beseitigen einer Beschichtung oder einer Schicht eines Grundkörpers eines Rohres mit einem abrasiven Verfahren ein flächig an das Rohr gepresster Schleifkörper bereits nach wenigen Bearbeitungsvorgängen mit beseitigten Partikeln der Beschichtung zugesetzt sein kann. Darüber hinaus können Körner oder Unebenheiten, mit denen ein Schleifkörper gebildet ist, verhältnismäßig schnell während der Bearbeitung abnutzen. Hingegen wird die Wirkung des Schneidmessers nicht oder nur unwesentlich beeinträchtigt von beseitigten Partikeln. Insbesondere je nach Gestaltung der Schneidkante des Messers, Wahl des Materials und der Härteverfahren für die Schneidkante des Messers und Geometrie der Schneidkante kann konstruktiv auf die Lebensdauer und die Zahl der Bearbeitungsvorgänge Einfluss genommen werden, die durchgeführt werden können, bevor das Schneidmesser ausgetauscht werden muss. Es versteht sich, dass zusätzlich zu dem erfindungsgemäßen Schneidmesser auch andere Bearbeitungselemente einschließlich eines Schleifelements Einsatz finden können.

Die Schneidkante ist radial nach innen in Richtung der Längsachse des Rohres verlagerbar. Infolge einer derartigen Verlagerung kann eine Schneidkraft zwischen Schneidkante und Beschichtung erzeugt werden. Weiterhin ist die Schneidkante derart orientiert, dass bei rotatorischer Bewegung des Bohrmaschinen-Werkzeugs die Schneidkante in Umfangsrichtung des Rohres bewegt wird. Erfindungsgemäß wird somit die Schneidkante mit der Schneidkraft gegen die Beschichtung gedrückt. Hierbei ist die Schneidkante derart zur Längsachse des Rohres orientiert ist, dass die Schneidkante nicht nur an einer einzigen axialen diskreten Kontaktstelle, bspw. wie dies für die Erstellung eines geschlossenen kreisförmigen Umfangseinschnitts erforderlich wäre, sondern mit einer gewissen axialen Erstreckung an dem Rohr anliegt. Hierbei kann die axiale Erstreckung der Anlage der Schneidkante an dem Rohr der axialen Erstreckung der zu erstellenden Funktionsfläche entsprechen.

Stark vereinfacht kann die Arbeitsweise des erfindungsgemäßen Bohrmaschinen-Werkzeugs als eine Art Schäl-Werkzeug beschrieben werden. Hierbei muss nicht zwingend ein zusammenhängender "Span" durch das Schneidmesser aus dem Rohr "abgeschält" werden. Weiterhin kann bei radialer Anpressung des Schneidmessers an das Rohr das Schneidmesser eine Schneidfläche besitzen, welche in einer ersten Extremstellung in radialer Richtung orientiert ist, so dass das Schneidmesser über die Mantelfläche des Rohres "schrappt". In einer anderen Extremstellung des Schneidmessers ist die Schneidfläche in Umfangsrichtung des Rohres orientiert, so dass das Schneidmesser ähnlich wie bei dem "Schälen eines Apfels" in Umfangsrichtung in die Beschichtung eintritt. Beliebige Winkelstellungen der Schneidfläche zwischen den genannten Extremstellungen sind ebenfalls im Rahmen der vorliegenden Erfindung möglich.

Möglich ist darüber hinaus, dass infolge der Schneidkraft mit Beginn des Bearbeitungsvorgangs das Schneidmesser bereits in die Beschichtung des Rohres eintritt und mit Einsetzen der Rotation des Bohrmaschinen-Werkzeugs die Schnitttiefe unverändert bleibt. Vorzugsweise verändert sich während der Bearbeitung aber infolge der Schneidkraft die Tiefe, mit welcher das Schneidmesser in die Beschichtung des Rohres eintritt oder die Beschichtung beseitigt.

Sofern in der vorliegenden Anmeldung Orientierungsangaben wie "parallel", "radial nach innen" und "in Umfangsrichtung" verwendet sind, sind diese nicht als exakte Angaben zu verstehen. Vielmehr sind auch Abweichungen gegenüber diesen Orientierungen, beispielsweise um bis zu 1 °, 2°, 5° oder sogar 10°, von diesen Formulierungen mit umfasst.

In weiterer Ausgestaltung der Erfindung ist die Schneidkante in einer Draufsicht auf das Bohrmaschinen-Werkzeug parallel zur Längsachse des Rohres orientiert. Infolge der parallelen Orientierung der Schneidkante zur Längsachse des Rohres ergibt sich eine in axialer Richtung des Rohres verlaufende Anlagelinie oder -fläche. Über die Längskontur der Schneidkante kann dann letztendlich die Kontur der mit der Bearbeitung hergestellten Funktionsfläche beeinflusst oder vorgegeben werden: Für geradlinige Ausbildung der Schneidkante in Längsrichtung ergibt sich somit im Idealfall eine zylinderförmige Funktionsfläche. Über beliebige anderweitige Konturverläufe in Richtung der Längsachse, bspw. konkav oder konvex gekrümmte Schneidkanten in Richtung der Längsachse, können beliebige anders gestaltete Funktionsflächen vorgegeben werden.

Ebenfalls möglich ist, dass die Schneidkante des mindestens einen Schneidmessers in einer Draufsicht auf das Bohrmaschinen-Werkzeug unter einem Winkel von 0° bis zu 40°, insbesondere 1° bis 30° oder 5° bis 20°, gegenüber der Längsachse des Rohres abgewinkelt ist. Hiermit kann u. U. dem Entstehen von Rattermarken entgegengewirkt werden, wobei zu diesem Zweck auch mehrere Messer mit wechselseitiger Orientierung der Schneidkanten eingesetzt werden können. Um trotz des genannten Winkels eine sich um die Mantelfläche des Rohres teilweise umlaufende Kontaktlinie zwischen Schneidkante und Rohr zu erhalten, ist für eine derartige Ausgestaltung vorzugsweise die Schneidkante konkav auszubilden. Je nach Konturverlauf der konkaven Schneidkante kann dann ebenfalls eine zylindrische Funktionsfläche mit geradliniger Längskontur oder eine Funktionsfläche mit abweichender konvexer oder konkaver Längskontur erstellt werden.

Für die Erzeugung der Schneidkraft, mit welcher die Schneidkante des Schneidmessers an die Beschichtung angepresst wird, gibt es vielfältige Möglichkeiten. Um lediglich einige Beispiele zu nennen, wird auf die Möglichkeit hingewiesen, dass das Bohrmaschinen-Werkzeug eine exzentrisch zur Rotationsachse verdrehbar oder verschieblich gelagerte träge Exzentermasse besitzt, die mit rotatorischen Antrieb des Bohrmaschinen-Werkzeugs eine radial nach außen orientierte Trägheitskraft erzeugt. Diese Kraft kann unter Zwischenschaltung eines geeigneten Verbindungs- und Übertragungsmechanismus umgewandelt werden in die Schneidkraft, die von der Antriebsgeschwindigkeit des Bohrmaschinen-Werkzeugs abhängig ist. Demgemäß kann durch Vorgabe der Antriebsdrehzahl der Bohrmaschine, mit welcher das Bohrmaschinen-Werkzeug gekoppelt wird, die Bearbeitungscharakteristik durch Veränderung der Schneidkraft beeinflusst werden. Ein weiteres Beispiel für die Aufbringung der Schneidkraft ist eine manuelle Vorgabe der Schneidkraft durch den Benutzer über ein Stellelement. Eine besonders einfache Erzeugung der Schneidkraft ist für eine Ausgestaltung der Erfindung gegeben, bei der die Schneidkraft über ein Federelement, beispielsweise eine Blattfeder, eine Elastomerfeder oder eine Druckfeder, erzeugt wird. Neben den geringen Kosten für eine Ausbildung mit einem derartigen Federelement hat diese Ausgestaltung den Vorteil, dass sich eine gut reproduzierbare Schneidkraft ergibt, die unter Umständen auch nicht oder nicht wesentlich abhängig ist von einer Rotationsgeschwindigkeit des Bohrmaschinen-Werkzeugs. Weiterhin hat der Einsatz eines Federelements den Vorteil, dass der Einsatz des Bohrmaschinen-Werkzeugs nicht beschränkt ist auf in einem engen Toleranzbereich vorgegebene Durchmesser des Rohres. Vielmehr kann über das Federelement eine automatische Anpassung an unterschiedliche Rohrdurchmesser erfolgen, da das Federelement unterschiedliche Rohrdurchmesser ausgleichen kann und dennoch eine Schneidkraft in einem definierten Schneidkraftbereich, welcher über die Federcharakteristik vorgegeben ist, vorgibt. Für die Dimensionierung des Federelements gibt es vielfältige Möglichkeiten. Für den Fall, dass es sich bei der zu beseitigenden Schicht um einen Lack handelt, kann beispielsweise ein Federelement eingesetzt werden, welches eine Schneidkraft von
- 10 bis 80 N, insbesondere
- 20 bis 50 N oder
- 25 bis 40 N
je Zentimeter Länge der Schneidkante erzeugt.

Reicht eine Ausrichtung des Bohrmaschinen-Werkzeugs gegenüber dem Rohr durch den Benutzer selbst oder entsprechende Halteeinrichtungen für Bohrmaschine, Bohrmaschinen-Werkzeug und/oder Rohr nicht aus, schlägt die Erfindung vor, dass eine Führungseinrichtung vorgesehen ist. Diese Führungseinrichtung richtet die Rotations- und Längsachse des Bohrmaschinen-Werkzeugs zu der Längsachse des Rohres aus. Hierdurch kann dafür Sorge getragen werden, dass sich auch eine Funktionsfläche ergibt, die rotationssymmetrisch zur Längsachse des Rohres ist.

Für die Ausbildung der Führungseinrichtung gibt es vielfältige Möglichkeiten. Gemäß einer beispielhaften Ausführungsform ist die Führungseinrichtung mit mindestens einem Abstützkörper ausgebildet, an welchem das Rohr mit seiner (inneren und/oder äußeren) Mantelfläche abgestützt ist. Beispielsweise stellt der Abstützkörper eine Abstützkraft bereit, die zumindest eine Komponente besitzt, die entgegengesetzt orientiert ist zu der Schneidkraft, die von dem Schneidmesser auf das Rohr aufgebracht wird. Beispielsweise kann in dem Bohrmaschinen-Werkzeug das Schneidmesser in einer 12-Uhr-Position auf die Mantelfläche des Rohres einwirken, während zwei Abstützkörper in der 4-Uhr-Position sowie 8-Uhr-Position auf die Mantelfläche einwirken, so dass symmetrische Kraftverhältnisse gegeben sind. Entsprechendes gilt für eine abweichende Anzahl von eingesetzten Schneidmessern und/oder Abstützkörpern.

Für die Ausbildung der Abstützkörper gibt es ebenfalls vielfältige Möglichkeiten. Für den Fall, dass ein Abstützkörper mit einer rauen Oberfläche ausgebildet ist, kann in der Kontaktfläche zwischen Abstützkörper und Mantelfläche des Rohres bereits eine Art Aufrauung der Mantelfläche des Rohres erfolgen, so dass nach dem Kontakt der Mantelfläche mit dem Abstützkörper der Schneidvorgang des Schneidmessers vereinfacht werden kann. Es ist allerdings auch möglich, dass ein Abstützkörper mit einer glatten Oberfläche ausgebildet ist.

Während möglich ist, dass der Abstützkörper eine gleitende Relativbewegung gegenüber der Mantelfläche des Rohres ausführt, womit der genannte aufrauende Effekt oder auch ein schleifender Effekt unterstützt werden kann, schlägt die Erfindung in weiterer Ausgestaltung vor, dass mindestens ein Abstützkörper drehbar gelagert ist. Mit der rotatorischen Bewegung des Bohrmaschinen-Werkzeugs wälzt der Abstützkörper an der Mantelfläche des Rohres ab. Beispielsweise kann als Abstützkörper eine drehbar gelagerte (Zylinder-)Rolle eingesetzt werden, die flächig an der Mantelfläche des Rohres anliegt mit glatter Oberfläche oder rauer Oberfläche aus den vorgenannten Gründen.

In weiterer Ausgestaltung der Erfindung ist in dem Bohrmaschinen-Werkzeug mindestens ein Aufnahmeraum für mittels der Schneidkante beseitigtes Beschichtungsmaterial vorgesehen, so dass die Funktion des Bohrmaschinen-Werkzeugs mit zunehmender Bearbeitung und wiederholten Bearbeitungsvorgängen für mehrere Rohre nicht beeinträchtigt ist. Möglich ist, dass das beseitigte Beschichtungsmaterial erst nach einer vorgegebenen Anzahl von Bearbeitungsvorgängen oder einer hinreichenden Befüllung des Aufnahmeraumes aus dem Bohrmaschinen-Werkzeug entfernt wird. Die Beseitigung kann dann durch Klopfen, Freiblasen des Aufnahmeraumes mit Druckluft u. ä. erfolgen. Ebenfalls möglich ist, dass in den Aufnahmeraum für das mittels der Schneidkante beseitigte Beschichtungsmaterial mindesten ein Abführkanal mündet, durch den während oder nach der Bearbeitung beseitigte Beschichtungspartikel aus dem Bohrmaschinen-Werkzeug entfernt werden können. Möglich ist auch, dass die Durchströmung derartiger Kanäle automatisiert infolge der Rotation des Bohrmaschinen-Werkzeugs, wozu die Mantelfläche desselben geeignete Lufteinlassstutzen und ähnliches besitzen kann.

Für den Fall, dass es von Bedeutung ist, dass die Funktionsfläche an dem Rohr in einem definierten Abstand von der Stirnseite des Rohres erzeugt werden soll, schlägt die Erfindung vor, dass in dem Bohrmaschinen-Werkzeug ein Endanschlag vorgesehen ist. Dieser Endanschlag gibt vor, wie weit das Rohr in das Bohrmaschinen-Werkzeug eingebracht werden kann.

In weiterer Ausgestaltung führt das Bohrmaschinen-Werkzeug zusätzlich zu der Ausbildung der Funktionsfläche weitere Funktionen aus. Beispielsweise schlägt die Erfindung vor, dass ein Bearbeitungselement in dem Bohrmaschinen-Werkzeug vorgesehen ist, welches gleichzeitig mit der teilweisen Beseitigung der Beschichtung des Rohres eine Stirnseite des Rohres entgratet. Hierzu kann auch eine Relativbewegung des Bohrmaschinen-Werkzeugs gegenüber dem Rohr durch den Antrieb mit der Bohrmaschine genutzt werden. Durch diese Ausgestaltung wird insbesondere ermöglicht, dass auch mit verhältnismäßig groben Bearbeitungsverfahren getrennte Rohre, beispielsweise bei Trennung mit einer Kappsäge, einer Bandsäge, einem Handrohrschneider, einem Rohrschneider mit Antrieb (Gewindeschneidmaschine etc.), genutzt werden können, wobei die durch diese groben Trennverfahren erstellten Grate oder Wulste erfindungsgemäß beseitigt werden können. Andererseits kann durch die eingangs genannte federnde Abstützung des Schneidmessers das Schneidmesser auch über derartige Grate oder Wulste hinübergeführt werden. Möglich ist auch, dass infolge eines nicht präzisen Trennvorgangs die Stirnseite des Rohres nicht exakt quer zur Längsachse des Rohres orientiert ist. In diesem Fall kann es von Vorteil sein, wenn das Bearbeitungselement zur Beseitigung der Grate an der Stirnseite des Rohres federnd abgestützt ist, um in gewissem Ausmaß einen Ausgleich bei Rotation schaffen zu können.

Für den Fall, dass ein und dasselbe Bohrmaschinen-Werkzeug genutzt werden soll für die Bearbeitung von Rohren mit mindestens zwei unterschiedlichen Rohrdurchmessern, kann eine Verstelleinrichtung vorgesehen sein, über die das Bohrmaschinen-Werkzeug einstellbar und anpassbar ist. Beispielsweise handelt es sich bei einer derartigen Verstelleinrichtung um eine Verstelleinrichtung, mittels welcher der Abstand des Schneidmessers und des Federelementes mitsamt der Abstützung des Federelementes von der Längs- und Rotationsachse des Bohrmaschinen-Werkzeug verstellt werden kann. Möglich ist auch, dass die Anpassung an unterschiedliche Rohrdurchmesser durch Einsatz unterschiedlicher Schneidmesser erfolgt. Entsprechend möglich ist, dass für unterschiedliche Rohrdurchmesser zwar dasselbe Schneidmesser und dieselbe Federeinrichtung Einsatz findet, aber eine anders gestaltete Führungseinrichtung oder andere Abstützkörper zum Einsatz kommen.

Vor dem Antrieb des Bohrmaschinen-Werkzeugs wird das Rohr in das Bohrmaschinen-Werkzeug eingeschoben. Hierbei ist es von Vorteil, wenn das Schneidmesser noch nicht mit der Schneidkraft radial nach innen beaufschlagt ist, da dieses zu einem Einschneiden des Schneidmessers in axialer Richtung in die Beschichtung führen könnte. Über geeignete Maßnahmen, beispielsweise eine Arretierung, die nach Beendigung des Einschiebens des Rohres in das Bohrmaschinen-Werkzeug wieder gelöst werden kann, kann das Schneidmesser während dieser Einführphase von der Beschichtung ferngehalten werden. Ist allerdings bereits während des Einschiebens des Rohres in das Bohrmaschinen-Werkzeug das Schneidmesser mit der Schneidkraft oder einer anderen Kraft radial nach innen beaufschlagt, ist es von Vorteil, wenn das Schneidmesser eine Einführschräge besitzt. Ohne Rohr in dem Bohrmaschinen-Werkzeug ist unter Umständen das Schneidmesser maximal radial nach innen verschoben. Zu Beginn des Einführens des Rohres in das Bohrmaschinen-Werkzeug kommt die Stirnseite des Rohres zur Anlage an die Einführschräge. Mit Drücken des Rohres in das Bohrmaschinen-Werkzeug hinein schiebt die Stirnseite dann infolge der Einführschräge das Schneidmesser radial nach außen, unter Umständen unter Erhöhung der Beaufschlagung des zugeordneten Federelements.

Für die Möglichkeiten der Kopplung des Bohrmaschinen-Werkzeugs mit der dem Antrieb dienenden Bohrmaschine gibt es vielfältige Möglichkeiten. Als besonders einfache, aber standardisierte Möglichkeit für eine derartige Kopplung schlägt die Erfindung den Einsatz eines Mehrkant-, insbesondere Sechskantquerschnitts vor, mit welchem das Bohrmaschinen-Werkzeug mit einem üblichen Futter eines Akku-Schraubers oder einer ähnlichen Antriebseinrichtung koppelbar ist.

In weiterer Ausgestaltung schlägt die Erfindung vor, dass das Schneidmesser auswechselbar ist, so dass bei einem Verschleiß der Schneidklinge einer Verringerung der Effizienz des Bearbeitungsverfahrens oder einer Verschlechterung der erstellten Funktionsfläche durch Auswechslung des Schneidmessers entgegengewirkt werden kann. Ebenfalls möglich ist, dass ein Auswechseln des Schneidmessers für die Anpassung an unterschiedliche Rohrdurchmesser, unterschiedliche herzustellende Funktionsflächen und ähnliches erfolgt.

Die Ausgestaltung der Schneidkante kann beliebig sein, insbesondere hinsichtlich der Querschnittskontur der Schneidkante und der eingesetzten Materialien und Härteverfahren. Gemäß einem besonderen Vorschlag der Erfindung kann eine gebrochene Schneidkante eingesetzt werden, die zu einer erhöhten Lebensdauer des Schneidmessers und damit des Bohrmaschinen-Werkzeugs führt.

Im Rahmen der vorliegenden Erfindung ist es ebenfalls möglich, dass nicht lediglich ein Messer auf den Umfang des Rohres einwirkt. Vielmehr können mehrere Schneidmesser über den Umfang gleichmäßig oder ungleichmäßig verteilt angeordnet sein. Die Schneidmesser können mit gleichen oder unterschiedlichen Schneidkanten ausgebildet sein und mit gleichen oder unterschiedlichen Schneidkräften an die Mantelfläche des Rohres angepresst werden. Ebenfalls möglich ist, dass die unterschiedlichen Schneidmesser jeweils für die Bearbeitung von Rohren unterschiedlicher Durchmesser aktivierbar sind.

In weiterer Ausgestaltung der Erfindung ist eine erhöhte Betriebssicherheit dadurch gewährleistet, dass das Bohrmaschinen-Werkzeug eine Rutschkupplung besitzt. Kommt es im Betrieb des Bohrmaschinen-Werkzeugs beispielsweise zu einem Verhaken des Schneidmessers mit dem Rohr, kann die Rutschkupplung das Bohrmaschinen-Werkzeug von dem Antrieb trennen, so dass in diesem Fall keine ungesicherten Betriebszustände, beispielsweise mit erhöhten, u. U. stoßartigen Handkräften für den Benutzer, auftreten.

Während durchaus möglich ist, dass ein Gehäuse des Bohrmaschinen-Werkzeugs mit einem Metall gebildet ist, schlägt die Erfindung in weiterer Ausgestaltung vor, das Gehäuse des Bohrmaschinen-Werkzeugs (zumindest teilweise) aus Kunststoff herzustellen, womit einerseits ein kostengünstiger Werkstoff gegeben ist mit den verbundenen einfachen Herstellverfahren (insbesondere ein Spritzgießverfahren) und andererseits ein leichtes Gehäuse mit vielfältigen Gestaltungsmöglichkeiten für die Formgebung des Gehäuses gewährleistet ist.

Für eine erfindungsgemäße Verwendung findet ein Bohrmaschinen-Werkzeug mit den zuvor erläuterten Merkmalen Einsatz für eine teilweise Beseitigung einer Beschichtung eines Rohres zur Erzeugung einer Funktionsfläche eines Dichtelements.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Längsschnitt durch ein Rohr, welches mit einem erfindungsgemäßen Bohrmaschinen-Werkzeug bearbeitet worden ist.
- **Fig. 2**: zeigt eine Ausgestaltung eines erfindungsgemäßen Bohrmaschinen-Werkzeug in einer räumlichen Explosionsdarstellung.
- **Fig. 3**: zeigt das Bohrmaschinen-Werkzeug gemäß Fig. 2 in einem zusammengebauten Zustand in einer Draufsicht.
- **Fig. 4**: zeigt das Bohrmaschinen-Werkzeug gemäß Fig. 3 in einer Vorderansicht.
- **Fig. 5**: zeigt das Bohrmaschinen-Werkzeug gemäß Fig. 3 und 4 in einer räumlichen Darstellung.
- **Fig. 6**: zeigt das Bohrmaschinen-Werkzeug gemäß Fig. 3 bis 5 in einer Ansicht gemäß Fig. 5, wobei allerdings auch verborgene Kanten gestrichelt dargestellt sind.
- **Fig. 7**: zeigt eine Prinzipskizze für die Wechselwirkung eines Schneidmessers mit gebrochener Schneidkante mit der Mantelfläche eines Rohres in einem erfindungsgemäßen Bohrmaschinen-Werkzeug.
- **Fig. 8**: zeigt eine Prinzipskizze für die Wechselwirkung eines Schneidmessers mit nicht gebrochener Schneidkante mit der Mantelfläche eines Rohres in einem erfindungsgemäßen Bohrmaschinen-Werkzeug.

### FIGURENBESCHREIBUNG

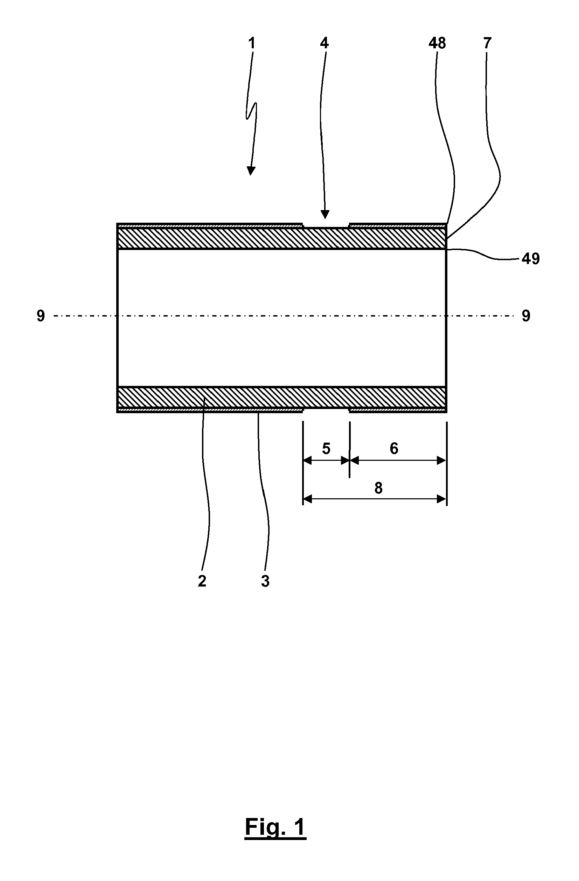

**Fig. 1** zeigt ein Rohr 1. Das Rohr 1 ist mit einem hohlzylinderförmigen Grundkörper 2, beispielsweise einem metallischen Rohrabschnitt, sowie einer Beschichtung 3 gebildet. Die Beschichtung 3 erstreckt sich zumindest über die äußere Mantelfläche 51 des Grundkörpers 2. Vor Einsatz des erfindungsgemäßen Bohrmaschinen-Werkzeugs erstreckt sich die Beschichtung 3 über die gesamte äußere Mantelfläche des Grundkörpers 2. Mit dem erfindungsgemäßen Bohrmaschinen-Werkzeug soll eine Funktionsfläche 4 erzeugt werden, an welcher sich beispielsweise ein Dichtelement abstützen soll und welche erhöhte Anforderungen hinsichtlich der Rundheit und der Oberflächenrauhigkeit erfüllen soll. Die Funktionsfläche 4 soll eine konstante axiale Erstreckung 5 besitzen, einen vorgegebenen Abstand 6 von einer Stirnseite 7 des Rohres 1 besitzen und mit einem Abstand 8 von der Stirnseite 7 enden. Das Rohr 1 besitzt eine Längsachse 9-9. Als eine Möglichkeit des Ergebnisses des Einsatzes des Bohrmaschinen-Werkzeugs ist in Fig. 1 die Beschichtung 3 im Bereich der Funktionsfläche 4 vollständig beseitigt, so dass die originäre Mantelfläche des Grundkörpers 2 verbleibt. Ebenfalls möglich ist, dass mit dem Einsatz des erfindungsgemäßen Bohrmaschinen-Werkzeugs die Beschichtung im Bereich der Funktionsfläche 4 nicht vollständig entfernt ist, sondern lediglich deren Schichtdicke gegenüber anderen Axialbereichen reduziert ist. Auch denkbar ist, dass nach Einsatz des erfindungsgemäßen Bohrmaschinen-Werkzeugs im Bereich der Funktionsfläche 4 die radiale Erstreckung des Grundkörpers 2 reduziert ist, so dass Material des Grundkörpers 2 entfernt worden ist. Darüber hinaus möglich ist, dass das den Grundkörper 2 bildende Halbzeug eine verhältnismäßig raue Oberfläche besitzt. In diesem Fall kann mit dem erfindungsgemäßen Bohrmaschinen-Werkzeug 10 eine Entfernung von Gipfeln des Grundkörpers 2 erfolgen, während in Tälern des Grundkörpers 2 noch Material der Beschichtung verbleibt. In einem derartigen Fall ist die erstellte Funktionsfläche 4 teilweise mit dem Material des Grundkörpers 2 und teilweise mit dem Material der Beschichtung 3 gebildet. Bei der Beschichtung 3 kann es sich um ein beliebiges Material handeln, beispielsweise einen Lack. Durchaus möglich ist, dass das erfindungsgemäße Bohrmaschinen-Werkzeug 10 Einsatz findet für die Bearbeitung eines nicht beschichteten Grundkörpers, so dass das Rohr 1 mit einem einzigen Material, beispielsweise als metallischer Rohrabschnitt ausgebildet ist. In diesem Fall wird mit dem Bohrmaschinen-Werkzeug 10 lediglich Material des Grundkörpers 2 zur Erstellung der Funktionsfläche 4 beseitigt, was in den Patentansprüchen auch als "Beseitigung einer Schicht" bezeichnet ist.

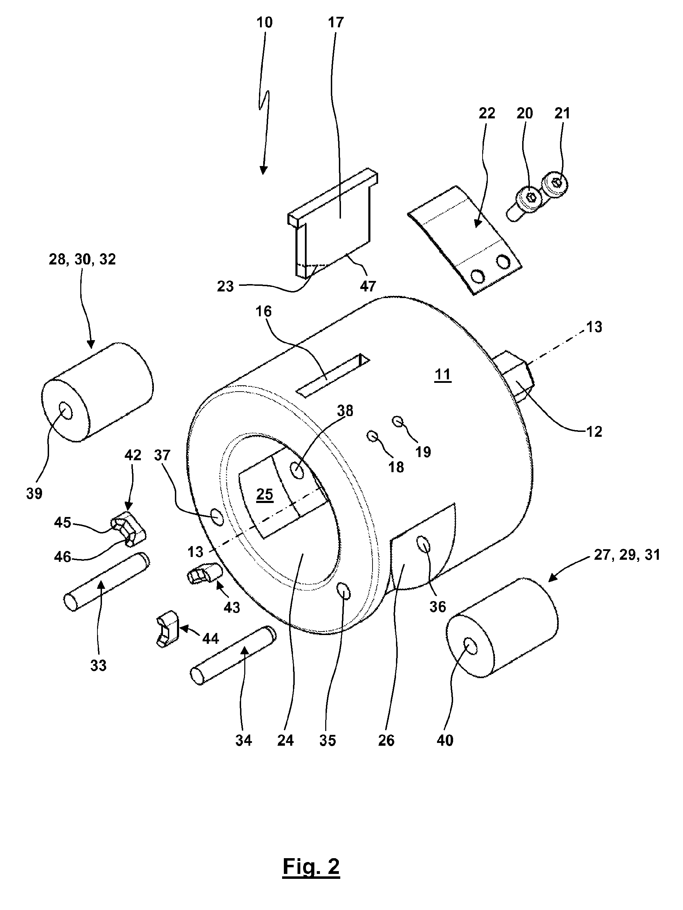

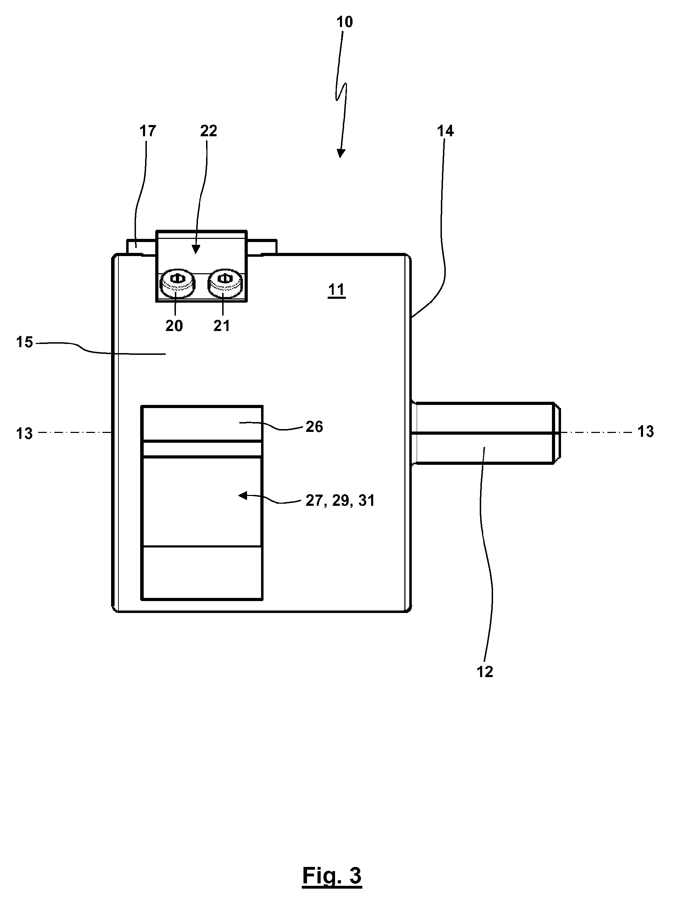

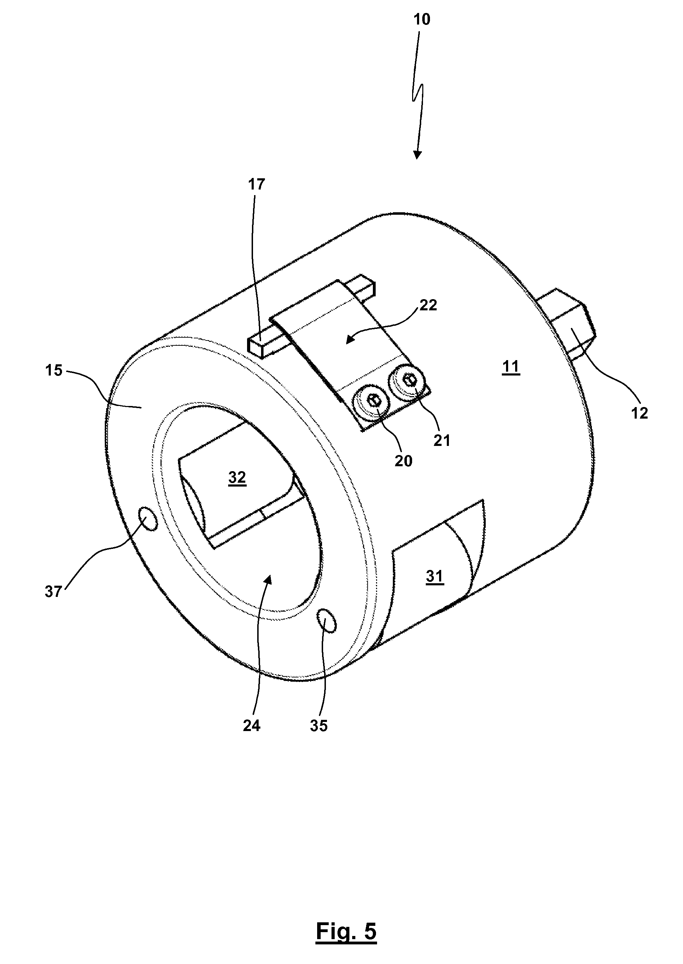

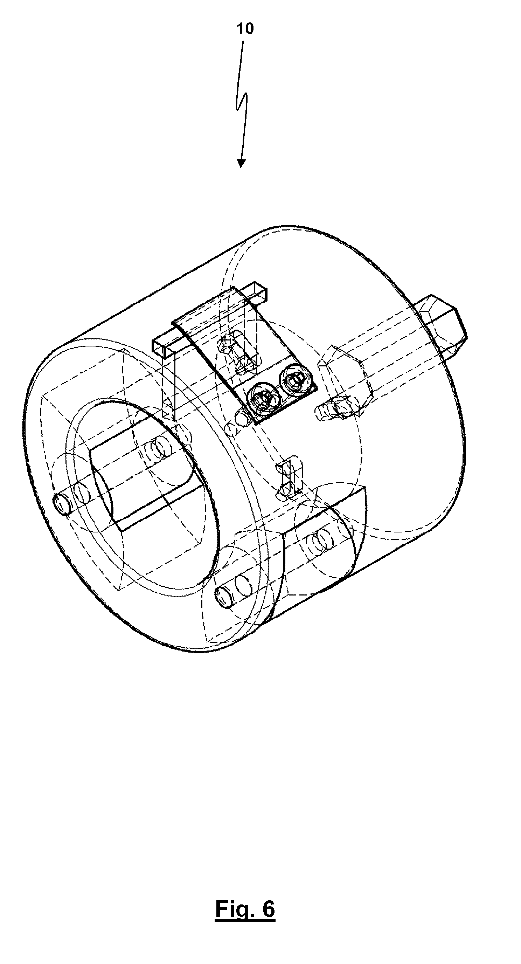

**Fig. 2** zeigt ein erfindungsgemäßes Bohrmaschinen-Werkzeug 10 in einer räumlichen Explosionsdarstellung, während in den **Fig. 3 bis 6** dasselbe Bohrmaschinen-Werkzeug 10 in zusammengebautem Zustand in unterschiedlichen Ansichten dargestellt ist.

Das Bohrmaschinen-Werkzeug 10 verfügt über ein Gehäuse 11. Das Gehäuse 11 besitzt einen Fortsatz, welcher ein Antriebselement bildet. Für das dargestellte Ausführungsbeispiel ist das Antriebselement als Sechskant 12 ausgebildet, der in an sich bekannter Weise mit einem Bohrfutter einer Bohrmaschine koppelbar ist. Der Sechskant 12 gibt eine Längs- und Rotationsachse 13 vor. Das Gehäuse 11 ist in erster Näherung "topfartig" ausgebildet oder besitzt einen U-förmigen Längsschnitt, wobei die parallelen Seitenschenkel des U symmetrisch zur Längsachse 13-13 angeordnet sind, während der Grundschenkel des U quer zur Längsachse 13-13 orientiert ist. Der Grundschenkel des U bildet eine scheibenartige Grundplatte 14, während die Seitenschenkel eine hohlzylinderförmige Gehäusewandung 15 bilden. Wie insbesondere aus Fig. 2 ersichtlich ist, besitzt die Gehäusewandung 15 eine sich in radialer Richtung durch diese erstreckende durchgehende Ausnehmung 16. In die Ausnehmung 16 ist ein Schneidmesser 17 radial von außen eingesetzt. Das Schneidmesser 17 ist in der Ausnehmung 16 begrenzt radial nach innen verschieblich geführt, wobei die Position des Schneidmessers 17 in axialer Richtung durch die Ausnehmung 16 festgelegt ist. Für das dargestellte Ausführungsbeispiel ist die Ausnehmung 16 schlitzartig mit einem rechteckigen, randgeschlossenen Querschnitt ausgebildet. Das Schneidmesser 17 ist in erster Näherung T-förmig ausgebildet, wobei der Querschnitt des Vertikalschenkels des T unter Ausbildung eines Spieles zur Ermöglichung der gleitenden Bewegung in radialer Richtung, aber auch der geeigneten Führung, in die Ausnehmung 16 mit korrespondierendem Querschnitt einsetzbar ist. Die Erstreckung des Querschenkels des T ist größer als die der Ausnehmung 16, so dass der Querschenkel des T für einen hinreichenden Eintritt des Schneidmessers 17 in die Ausnehmung 16 in Richtung der Längsachse 13-13 zur Anlage an die Mantelfläche der Gehäusewandung 15 kommt, wodurch eine Endstellung des Schneidmessers 17 mit maximalem Eintritt des Schneidmessers 17 radial nach innen vorgegeben ist. In Umfangsrichtung neben der Ausnehmung 16 besitzt das Gehäuse 11 Gewindebohrungen 18, 19, in welchen über Befestigungsschrauben 20, 21 ein Federblech 22 an dem Gehäuse 11 festgeschraubt werden kann. In dem den Schrauben 20, 21 gegenüberliegenden Endbereich stützt sich das Federblech 22 unter Vorspannung an dem Querschenkel des T des Schneidmessers 17 ab, so dass das Federblech 22 das Schneidmesser 17 zur Erzeugung einer Schneidkraft radial nach innen drückt. Das Schneidmesser 17 sowie die Ausnehmung 16 sind wie in Fig. 2 dargestellt parallel zur Längsachse 13-13 orientiert. Das Schneidmesser 17 kann wie gestrichelt dargestellt mit einer Einführschräge 23 ausgestattet sein.

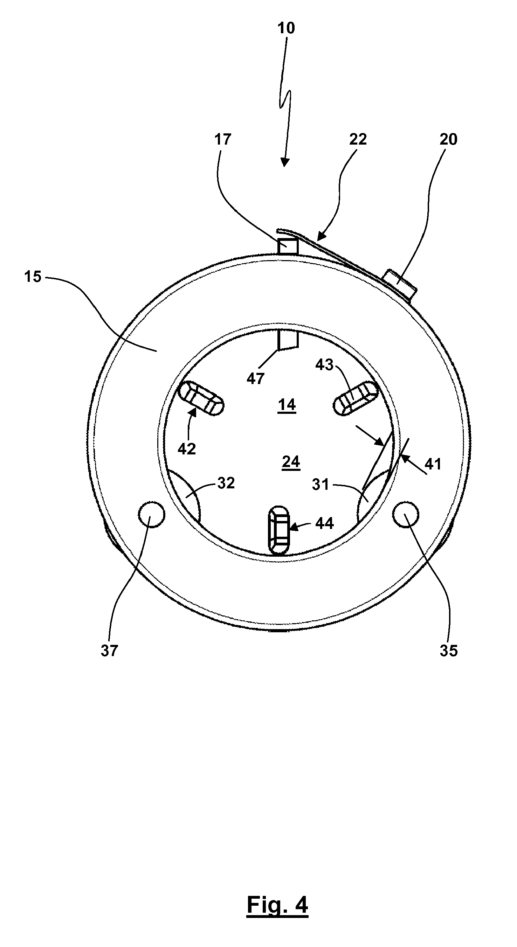

Das Gehäuse 11 bildet einen Aufnahmeraum 24, welcher einseitig offen ist für den Eintritt des Rohrs 1, radial nach außen durch die Gehäusewandung 15 begrenzt und in Richtung des Sechskants 12 durch die Grundplatte 14 begrenzt ist. Die Gehäusewandung 15 besitzt in den Aufnahmeraum 24 mündende radial durchgehende randgeschlossene Ausnehmungen 25, 26, in welchen Führungseinrichtungen 27, 28 Aufnahme finden. Für das dargestellte Ausführungsbeispiel sind die Führungseinrichtungen 27, 28 als Abstützkörper 29, 30, hier drehbar gelagerte Rollen 31, 32, ausgebildet. Die Rollen 31, 32 sind auf einem Lagerbolzen 33, 34 drehbar gelagert. Die Lagerbolzen 33, 34 erstrecken sich bei Orientierung parallel zur Längsachse 13-13 durch die Ausnehmungen 25, 26 und finden feste Aufnahme in ihren Endbereichen in Bohrungen 35, 36 bzw. 37, 38. Die Lagerbolzen 33, 34 erstrecken sich durch Längsbohrungen 39, 40 der Rollen 31, 32. Wie insbesondere in Fig. 4 zu erkennen ist, erstrecken sich die Rollen 31, 32 über die innere Mantelfläche der Gehäusewandung 15 hinaus um einen Abstand 41 radial nach innen in Richtung der Längsachse 13-13.

Weiterhin in Fig. 2 zu erkennen sind drei Bearbeitungselemente 42, 43, 44. Die Bearbeitungselemente 42, 43, 44 sind in erster Näherung V-förmig oder U-förmig mit von dem Grundschenkel des U weg sich nach außen erweiternden Seitenschenkeln ausgebildet. Die Seitenschenkel des V oder U bilden in diesem Fall jeweils Schneiden 45, 46. Die Bearbeitungselemente 42, 43, 44 sind bei gleichmäßiger Verteilung über den Umfang an der Grundplatte 14 befestigt oder über zwischengeschaltete Federelemente Federn in Richtung der Längsachse 13-13 an der Grundplatte 14 abgestützt. Hierbei entspricht der Abstand der Bearbeitungselemente 42, 43, 44 von der Längsachse 13 dem Radius des mit dem Bohrmaschinen-Werkzeug 10 zu bearbeitenden Rohres 1.

Für den Gebrauch des Bohrmaschinen-Werkzeugs 10 wird zunächst das Bohrmaschinen-Werkzeug 10 über den Sechskant 12 mit einem Bohrfutter einer Bohrmaschine gekoppelt. Hieran anschließend wird das zu bearbeitende Rohr 1 in den Aufnahmeraum 24 des Bohrmaschinen-Werkzeugs 10 eingeführt. Für das dargestellte Ausführungsbeispiel ist das Schneidmesser 17 in einer 12-Uhr-Position hinsichtlich des Umfangs des Bohrmaschinen-Werkzeugs 10 angeordnet, während die Führungseinrichtungen 27, 28 in einer 4-Uhr-Position sowie 8-Uhr-Position angeordnet sind. Während des Einführens des Rohres 1 in den Aufnahmeraum 24 gleitet die Mantelfläche 51 des Rohres in axialer Richtung entlang der Mantelfläche der Rollen 31, 32, ohne dass eine wälzende Bewegung der Rollen 31, 32 entlang der Mantelfläche 51 des Rohres 1 erfolgen muss. Über die Anlage der Mantelfläche 51 des Rohres 1 an den Rollen 31, 32 ist aber bereits der Abstand der Mantelfläche 51 des Rohres 1 von der Gehäusewandung 15 vorgegeben, wobei bei flächiger Anlage zwischen Rollen 31, 32 und Mantelfläche 51 des Rohres 1 auch bereits eine Ausrichtung der Längsachsen 9-9 und 13-13 erfolgt sein kann. Zu Beginn des Einschiebens des Rohres 1 in den Aufnahmeraum 24 befindet sich das Schneidmesser 17 infolge der Beaufschlagung durch das Federblech 22 in einem maximal in das Bohrmaschinen-Werkzeug 10 radial nach innen eingeschobenen Zustand. Mit dem Einschieben des Rohres 1 kommt die Stirnseite 7 des Rohres 1 zur Anlage an die Einführschräge 23 des Schneidmessers. Mit weiterem Einführen des Rohres 1 schiebt die Stirnseite 7 das Schneidmesser 17 radial nach außen, bis eine Schneidkante 47 des Schneidmessers 17 zur Anlage an die Mantelfläche 51 des Rohres 1 kommt. Bei einer weiteren axialen Bewegung des Rohres 1 gleitet dann die Schneidkante 47 entlang der Mantelfläche 51 des Rohres 1. Eine Endstellung des Rohres 1 kann erreicht sein, wenn die Stirnseite 7 des Rohres 1 zur Anlage kommt an die Grundplatte 14 oder einen sich an der Grundplatte 14 abstützenden Endanschlag. Für das dargestellte Ausführungsbeispiel ist der Endanschlag aber gebildet mit den Bearbeitungselementen 42-44. Hierbei kommen die Schneiden 45 jeweils zur Anlage an eine Außenkante 48 im Bereich der Stirnseite 7 des Rohres 1, während die Schneiden 46 jeweils zur Anlage an eine Innenkante 49 der Stirnseite 7 des Rohres 1 kommen. Mit zunehmendem Einpressen des Rohres 1 in das Bohrmaschinen-Werkzeug 10 wird die Anpresskraft der Außen- und Innenkante 48, 49 an die Schneiden 45, 46 erhöht. Wird nun das Bohrmaschinen-Werkzeug 10 durch Aktivierung des Antriebs in Rotation versetzt, aber das Rohr 1 manuell oder über eine Halteeinrichtung fixiert, hat dies parallele Materialbearbeitungsvorgänge zur Folge:
a) Zunächst entgraten die Schneiden 45, 46 je nach Einpressung des Rohres 1 in den Aufnahmeraum 24 in Richtung der Längsachse 13-13 die Außenkante 48 und Innenkante 49 des Rohres 1.
b) Die Mantelfläche 51 des Rohres 1 führt eine Relativbewegung zu der Schneidkante 47 in Umfangsrichtung um die Längsachse 13-13 aus, wobei die Schneidkante 47 auf die Mantelfläche 51 des Rohres 1 einwirkt und Material von dem Rohr, insbesondere der Beschichtung 3, abträgt, abkratzt oder "abschält".
c) Während des Antriebes führen die Rollen 31, 32 eine wälzende Bewegung gegenüber der Mantelfläche 51 des Rohres 1 aus. Sind die Rollen 31, 32 glatt ausgebildet, erfolgt unter Umständen keine signifikante Materialbearbeitung im Bereich der Kontaktflächen zwischen den Rollen 31, 32 und der Mantelfläche 51 des Rohres 1. Ebenfalls denkbar ist allerdings, dass die Mantelflächen der Rollen 31, 32 ungleichförmig ausgebildet sind, beispielsweise rau, mit Riefen oder einer erhöhten Rauhigkeit. In diesem Fall erfolgt eine Aufrauung der Mantelfläche 51 des Rohres 1, womit der Verarbeitungsvorgang durch die Schneidkante 47 gemäß b) vorbereitet oder unterstützt werden kann.

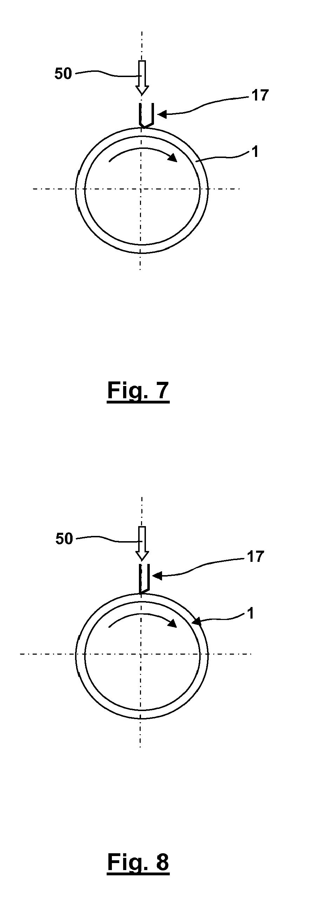

**Fig. 7 und 8** zeigen schematisch die Relativbewegung zwischen Rohr 1 und Schneidmesser 17 in Umfangsrichtung. Gemäß Fig. 7 findet ein Schneidmesser 17 Einsatz, welches über eine gebrochene Schneidkante 47 verfügt, während gemäß Fig. 8 eine nicht gebrochene Schneidkante Einsatz findet. Eine Haupterstreckungsebene des Schneidmessers 17 ist gemäß Fig. 7 und 8 radial zur Längsachse 9-9 bzw. 13-13 sowie in Richtung dieser Längsachse orientiert. Weiterhin ist in Fig. 7 und 8 die in radialer Richtung orientierte Schneidkraft 50 gekennzeichnet.

Infolge der Abstützung des Schneidmessers 17 über das Federblech 22 ist unter Umständen der Ausgleich variierender Rohrdurchmesser, insbesondere durch einen toleranzbedingten veränderlichen Außendurchmesser der Beschichtung 3, von bis zu 1,5 mm möglich.

In den Figuren ist ein Ausführungsbeispiel mit einem Schneidmesser 17 und zwei Führungseinrichtungen 27, 28 dargestellt. Die Erfindung kann für andere Ausführungsformen mit einer beliebigen anderen Zahl von Schneidmessern 17 und Führungseinrichtungen 27, 28 ausgebildet sein. Für die Zentrierung und Ausrichtung der Längsachsen 9-9 und 13-13 können beliebige anderweitige Zentrier- und Führungseinrichtungen eingesetzt werden. Beispielsweise möglich ist, dass das Bohrmaschinen-Werkzeug 10 über einen Dorn verfügt, der in den Innendurchmesser des Rohres 1 eintritt. Ebenfalls möglich ist, dass Führungseinrichtungen, Abstützkörper oder Rollen an der Innenfläche des Rohres abgestützt sind.

In der Gehäusewandung 15 können vor dem Schneidmesser 17 Aushöhlungen, Bohrungen, radial nach außen orientierte Ausnehmungen angeordnet sein, die als Aufnahmeräume für mit dem Schneidmesser 17 von dem Rohr abgetrennte Partikel dienen können.

### BEZUGSZEICHENLISTE

- 1: Rohr
- 2: Grundkörper
- 3: Beschichtung
- 4: Funktionsfläche
- 5: axiale Erstreckung
- 6: Abstand
- 7: Stirnseite
- 8: Abstand
- 9: Längsachse
- 10: Bohrmaschinen-Werkzeug
- 11: Gehäuse
- 12: Sechskant
- 13: Längs- und Rotationsachse
- 14: Grundplatte
- 15: Gehäusewandung
- 16: Ausnehmung
- 17: Schneidmesser
- 18: Gewindebohrung
- 19: Gewindebohrung
- 20: Befestigungsschraube
- 21: Befestigungsschraube
- 22: Federblech
- 23: Einführschräge
- 24: Aufnahmeraum
- 25: Ausnehmung
- 26: Ausnehmung
- 27: Führungseinrichtung
- 28: Führungseinrichtung
- 29: Abstützkörper
- 30: Abstützkörper
- 31: Rolle
- 32: Rolle
- 33: Lagerbolzen
- 34: Lagerbolzen
- 35: Bohrung
- 36: Bohrung
- 37: Bohrung
- 38: Bohrung
- 39: Längsbohrung
- 40: Längbohrung
- 41: Abstand
- 42: Bearbeitungselement
- 43: Bearbeitungselement
- 44: Bearbeitungselement
- 45: Schneiden
- 46: Schneiden
- 47: Schneidkante
- 48: Außenkante
- 49: Innenkante
- 50: Schneidkraft
- 51: Mantelfläche

## Patentansprüche

1. Bohrmaschinen-Werkzeug (10) zum zumindest teilweisen Beseitigen einer Beschichtung (3) oder Schicht eines Grundkörpers (2) eines Rohres (1), **dadurch gekennzeichnet, dass** mindestens ein Schneidmesser (17) vorgesehen ist, dessen Schneidkante (47)
a) derart zur Längsachse (9) des Rohres orientiert ist, dass die Schneidkante (47) mit einer axialen Erstreckung (5) an dem Rohr (1) anliegt,
b) radial nach innen in Richtung der Längsachse (9) des Rohres (1) unter Erzeugung einer Schneidkraft (50) zwischen Schneidkante (47) und Rohr (1) verlagerbar ist und
c) derart orientiert ist, dass bei rotatorischer Bewegung des Bohrmaschinen-Werkzeugs (10) die Schneidkante (47) eine Relativbewegung in Umfangsrichtung des Rohres (1) ausführt.

2. Bohrmaschinen-Werkzeug (10) nach Anspruch 1, **dadurch gekennzeichnet, dass** die Schneidkante (47) des mindestens einen Schneidmessers (17) in einer Draufsicht auf das Bohrmaschinen-Werkzeug (10) parallel zur Längsachse (9) des Rohres (1) orientiert ist.

3. Bohrmaschinen-Werkzeug (10) nach Anspruch 1, **dadurch gekennzeichnet, dass**
a) die Schneidkante (47) des mindestens einen Schneidmessers (17) in einer Draufsicht auf das Bohrmaschinen-Werkzeug (10) unter einem Winkel von 0° bis zu 40°, insbesondere 1° bis 30° oder 5° bis 20°, gegenüber der Längsachse (9) des Rohres (1) orientiert ist und
b) die Schneidkante (47) konkav ausgebildet ist.

4. Bohrmaschinen-Werkzeug (10) nach einem der vorhergehenden Ansprüche, **dadurch gekennzeichnet, dass** die Schneidkraft (50) über ein Federelement (Federblech 22) erzeugt wird.

5. Bohrmaschinen-Werkzeug (10) nach einem der vorhergehenden Ansprüche, **dadurch gekennzeichnet, dass** eine Führungseinrichtung (27, 28) vorgesehen ist, die die Rotationsund Längsachse (13) des Bohrmaschinen-Werkzeuges (10) zu der Längsachse (9) des Rohres (1) ausrichtet.

6. Bohrmaschinen-Werkzeug (10) nach Anspruch 5, **dadurch gekennzeichnet, dass** die Führungseinrichtung (27, 28) mit mindestens einem Abstützkörper (29, 30) ausgebildet ist, an welchem das Rohr (1) mit seiner Mantelfläche (51) abgestützt ist.

7. Bohrmaschinen-Werkzeug (10) nach Anspruch 6, **dadurch gekennzeichnet, dass** mindestens ein Abstützkörper (29, 30) mit einer rauen Oberfläche ausgebildet ist.

8. Bohrmaschinen-Werkzeug (10) nach Anspruch 6 oder 7, **dadurch gekennzeichnet, dass** mindestens ein Abstützkörper (29, 30) drehbar gelagert ist und mit rotatorischer Bewegung des Bohrmaschinen-Werkzeugs (10) an der Mantelfläche (51) des Rohres (1) abwälzt.

9. Bohrmaschinen-Werkzeug (10) nach einem der vorhergehenden Ansprüche, **dadurch gekennzeichnet, dass** mindestens ein Aufnahmeraum (24) für mittels der Schneidkante (47) beseitigtes Material oder beseitigte Partikel vorgesehen ist.

10. Bohrmaschinen-Werkzeug (10) nach einem der vorhergehenden Ansprüche, **dadurch gekennzeichnet, dass** ein Endanschlag vorgesehen ist, welcher vorgibt, wie weit das Rohr (1) in das Bohrmaschinen-Werkzeug (10) eingebracht werden kann.

11. Bohrmaschinen-Werkzeug (10) nach einem der vorhergehenden Ansprüche, **dadurch gekennzeichnet, dass** mindestens ein Bearbeitungselement (42, 43, 44) vorgesehen ist, welches gleichzeitig mit der zumindest teilweisen Beseitigung der Beschichtung (3) oder Schicht des Rohres (1) eine Stirnseite (7) des Rohres (1) entgratet.

12. Bohrmaschinen-Werkzeug (10) nach einem der vorhergehenden Ansprüche, **dadurch gekennzeichnet, dass** eine Verstelleinrichtung vorgesehen ist, über die das Bohrmaschinen-Werkzeug (10) einstellbar ist für die Bearbeitung von mindestens zwei unterschiedlichen Rohrdurchmessern.

13. Bohrmaschinen-Werkzeug (10) nach einem der vorhergehenden Ansprüche, **dadurch gekennzeichnet, dass** das Schneidmesser (17) eine Einführschräge (23) besitzt.

14. Bohrmaschinen-Werkzeug (10) nach einem der vorhergehenden Ansprüche, **dadurch gekennzeichnet, dass** das Schneidmesser (17) auswechselbar ist.

15. Bohrmaschinen-Werkzeug (10) nach einem der vorhergehenden Ansprüche, **dadurch gekennzeichnet, dass** mehrere Schneidmesser (17) über den Umfang verteilt angeordnet sind.

16. Verwendung eines Bohrmaschinen-Werkzeugs (10) nach einem der vorhergehenden Ansprüche für die zumindest teilweise Beseitigung einer Beschichtung (3) oder Schicht eines Rohres (1) zur Erzeugung einer Funktionsfläche eines Dichtelements.
